# EUROPEAN PATENT APPLICATION

(11) **EP 1 890 288 A2**
(43) Date of publication of application: **20.02.2008**
(21) Application number: 05822697.8
(22) Date of filing: 27.12.2005
(51) Int. Cl.: G11B 7/24, G11B 7/26

(54) **DISC STRUCTURE AND METHOD FOR MANUFACTURING SAME**

(30) Priority: 28.12.2004 JP 2004380354
(71) Applicant: IntelligentDisc, Inc., Yokohama-shi, Kanagawa 2220033 (JP)
(72) Inventor: SHIGETOMI, T., IntelligentDisc, Inc., Kouhoku-ku, Yokohama-shi, Kanagawa (JP); KARIMOTO, Hiroyasu, IntelligentDisc, Inc., Kouhoku-ku, Yokohama-shi, Kanagawa (JP)
(74) Representative: Vossius & Partner
(86) International application number: PCT/JP2005/023878
(87) International publication number: WO 2006/070792

(57) **Abstract**

An object of the present invention is to provide a disk structure and a disk-structure manufacturing method that are capable of preventing the degradation of a signal-to-noise ratio resulting from the occurrence of an eddy current.

On a disk 101, a thin film of metal 102, a magnetic thin film 103, and an insulating film 104 are formed in this order, and on the insulating film 104, an RF-ID chip 106 and components of an antenna 109 connected to the RF-ID chip 106 are formed.

## Description

### FIELD OF THE INVENTION

The present invention relates to a disk structure and a disk-structure manufacturing method, and more particularly to a disk structure in which a radio circuit including an antenna such as an RF-ID chip is mounted on a disk and a method of manufacturing such a disk structure.

### DESCRIPTION OF THE RELATED ART

Systems, in which a signal processing circuit such as a CPU is mounted on an optical disk and in which signal processes relating organically to information recorded on the optical disk are carried out, have attracted attention because they rapidly broaden the applications of conventional optical disks. The signal transfer between the signal processing circuit such as a CPU and an external unit is typically performed through radio signals between an antenna included in a radio communication circuit provided on the CPU side and an antenna provided on the external unit side. As a CPU to be mounted on an optical disk, it is effective to employ an RF-ID chip because it is structurally simple and low-cost. A structure in which the transmission of information between a disk and an external unit is performed by a radio communication circuit is disclosed in Patent Document 1 by way of example.
[Patent Document 1] Japanese Patent Laid-Open Publication No. Hei 11-007436 (FIG. 2, column no. [0011])

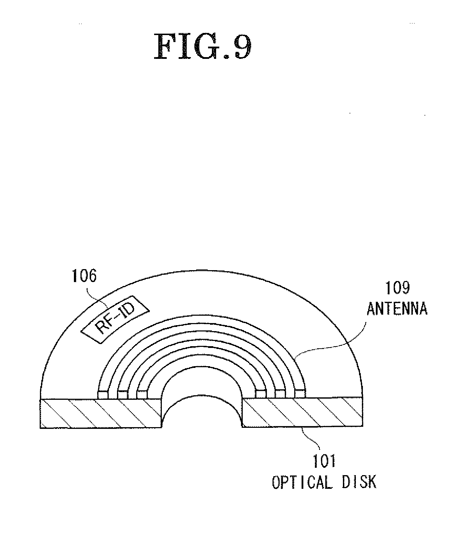

An example of the structure in which an RF-ID chip is mounted on an optical disk is shown in FIG. 9. In the figure, an RF-ID chip 106 is mounted on an optical disk 101, and an antenna coil 109 connected to the RF-ID chip 106 is formed on the optical disk 101.

### DISCLOSURE OF THE INVENTION

### PROBLEMS TO BE SOLVED BY THE INVENTION

The optical disk with the RF-ID chip mounted thereon is driven by a disk drive, and between a reader/writer (R/W) unit and the RF-ID chip, information is transferred by radio frequency signals.

However, in the case of employing such an optical disk, information is transferred by radio frequency signals, so the following problems have arisen.

That is, because a high-frequency radio signal of a few MHz or greater is sent out from the reader/writher (R/W) unit to the RF-ID chip housed in the disk drive, that signal passes through not only the RF-ID chip but also various electric circuits and conductors (spindle motor, etc.) provided within the disk drive, and induces an eddy current. Because of the eddy current, noise components will occur within electric circuits and degrade the original signal-to-noise ratio.

The present invention has been made in view of the problems described above. Accordingly, it is an object of the present invention to provide a disk structure and a disk-structure manufacturing method that are capable of preventing the degradation of a signal-to-ratio resulting from the occurrence of an eddy current, while overcoming such problems.

### MEANS FOR SOLVING THE PROBLEMS

In order to solve the above problems, a disk and a method of manufacturing such a disk structure according to the present invention employs the following featured structures.
(1) A disk structure in which components of a radio communication unit are formed on a magnetic thin film formed on a disk.
(2) A disk structure in which a thin film of metal, a magnetic thin film, and an insulating film are formed on a disk in this order, and in which an RF-ID chip and components of an antenna connected to said RF-ID chip are formed on said insulating film.
(3) A disk structure in which a magnetic thin film and an insulating film are formed on a disk in this order, and in which an RF-ID chip and components of an antenna connected to said RF-ID chip are formed on said insulating film.
(4) The disk structure as set forth in claim 2, wherein said thin film of metal is formed from an aluminum material.
(5) The disk structure as set forth in any one of claims 1 to 4, wherein said magnetic thin film is formed from a ferrite material.
(6) The disk structure as set forth in any one of claims 1 to 5, wherein said disk has a recess in which said components are formed.
(7) The disk structure as set forth in any one of claims 1 to 6, wherein said components are covered with a resin mold layer.
(8) The disk structure as set forth in claim 6, wherein said components formed in said recess are covered with a resin mold, the resin mold being grown to a thickness such that its top surface becomes approximately coplanar with a disk surface.
(9) The disk structure as set forth in any one of claims 1 to 8, wherein said radio communication unit and RF-ID chip are mounted on an inner circumferential side of the disk.
(10) The disk structure as set forth in any one of claims 1 to 9, wherein said disk has recording surfaces on both surfaces, respectively.
(11) The disk structure as set forth in any one of claims 1 to 10, wherein said disk is made by bonding two disks together, said radio communication unit being installed at a position near a central portion so that it is sandwiched in between said two disks.
(12) The disk structure as set forth in any one of claims 1 to 11, wherein said disk is an optical disk.
(13) A disk-structure manufacturing method comprising:
   a step of making a disk;
   a step of forming a thin film of metal on a predetermined portion on said disk;
   a step of forming a magnetic thin film on said thin film of metal;
   a step of forming an insulating film on said magnetic thin film;
   a step of forming a thin film of metal on said insulating film and then forming the metal film into an antenna coil having a desired shape by etching; and
   a step of mounting an RF-ID chip on a predetermined region on said disk through an adhesive layer and connecting said RF-ID chip to said antenna coil.
(14) A disk-structure manufacturing method comprising:
   a step of making a disk;
   a step of forming a magnetic thin film on a predetermined portion on said disk;
   a step of forming an insulating film on said magnetic thin film;
   a step of forming a thin film of metal on said insulating film and then forming the metal film into an antenna coil having a desired shape by etching; and
   a step of mounting an RF-ID chip on a predetermined region on said disk through an adhesive layer and connecting said RF-ID chip to said antenna coil.

### ADVANTAGES OF THE INVENTION

The present invention is capable of considerably reducing an eddy current that occurs when a radio wave sent out to an RF-ID chip mounted on an optical disk passes through various electric circuits and conductors within the disk drive. As a result, the degradation of a signal-to-ratio (SNR) due to the superposition of a noise component resulting from an eddy current on the original signal current can be prevented, whereby stable signal transmission becomes possible.

### BRIEF DESCRIPTION OF THE DRAWINGS

FIG. 1 is a sectional view of an embodiment of a disk structure according to the present invention ;
FIG. 2 shows a simplified part-sectional view for explaining an optical disk structure according to this embodiment ;
FIG. 3 is a simplified sectional view of another embodiment of the disk structure according to the present invention ;
FIG. 4 is a simplified sectional view of a disk structure according to still another embodiment of the present invention ;
FIG. 5 shows a simplified diagram as the disk (optical disk) according to the present invention is loaded in a disk drive and operated ;
FIG. 6 is a simplified sectional view of a disk structure according to yet another embodiment of the present invention ;
FIG. 7 is a simplified sectional view of a disk structure according to a further embodiment of the present invention ;
FIG. 8 is a flowchart showing a manufacturing steps of disc structure according to the present invention;
FIG.9 is an example of the structure in which an RF-ID chip is mounted on an optical disk;

### DESCRIPTION OF THE NUMERALS

- 1: a disc drive
- 2: a reader/writer (R/W) unit
- 11: a turntable
- 12: a spindle motor
- 13: a controller
- 14: a pick up
- 101, 101A, 101B: a optical disk
- 102: a thin film of metal
- 103: a magnetic thin film
- 104: a insulating film
- 105: an adhesive layer
- 106: RF-ID chip
- 107: a lead
- 108: a connecting layer
- 109: an antenna
- 110: a resin mold layer

### DESCRIPTION OF THE PREFERRED EMBODIMENTS

The construction and operation of a preferred embodiment of a disk structure according to the present invention will be described with reference to the drawings. In the following description, while this embodiment is applied to optical disks, the present invention is not to limited to them, but is applicable to all disks having the same structure.

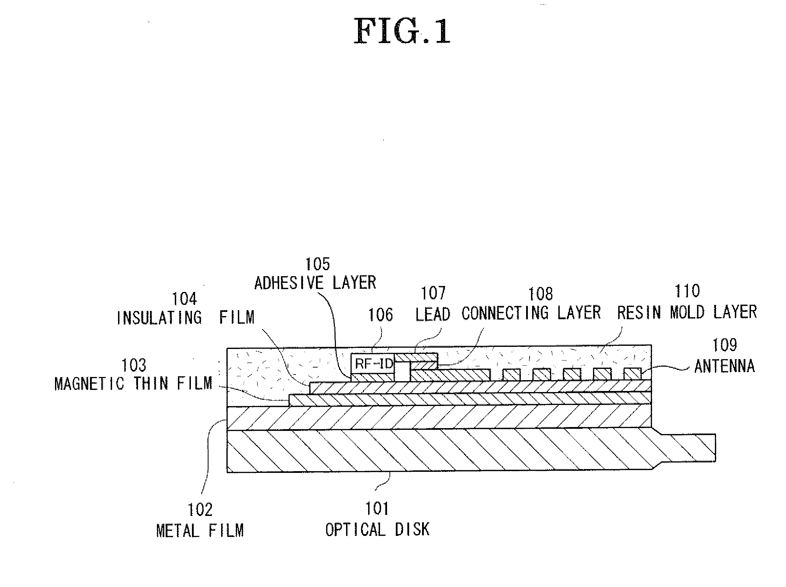

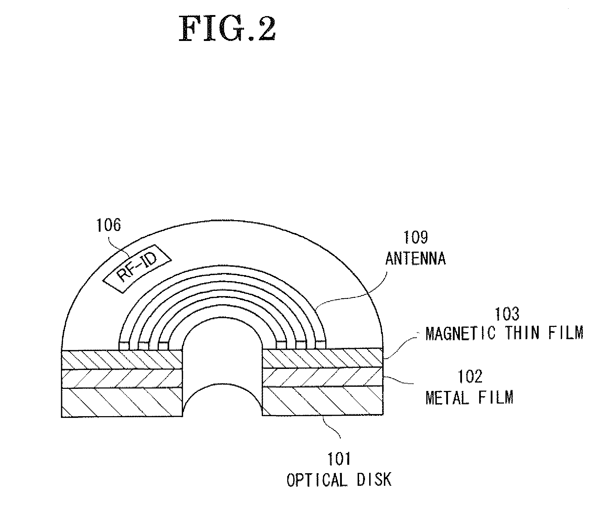

FIG. 1 is a sectional view of an embodiment of a disk structure according to the present invention. FIG. 2 shows a simplified part-sectional view for explaining an optical disk structure according to this embodiment. In FIG. 2, some of the components shown in FIG. 1 are omitted.

In the figures, in this embodiment, an ordinary optical disk 101 has a thin film of metal (e.g., a film of aluminum (Al) in this embodiment) 102 formed on the surface thereof. This metal film 102 has a magnetic thin film (ferrite, etc.) 103 formed thereon, the magnetic thin film 103 having a wider area than a region on which a RF-ID chip 106 is formed. This magnetic thin film 103 has an insulating film 104 such as polyimide formed thereon as a flexible substrate. The insulating film 104 has the RF-ID chip 106 formed thereon through an adhesive layer 105. The insulating film 104 also has a helical antenna coil 109 circumferentially formed thereon, the helical antenna coil 109 consisting of a thin film of metal. This antenna coil 109 and RF-ID chip 106 are connected together by a lead 107 and a connecting layer 108. Further, the metal film 102, magnetic thin film 103, insulating film 104, RF-ID chip 106, antenna coil 109, lead 107, and connecting layer 108 are covered with a resin mold layer 110.

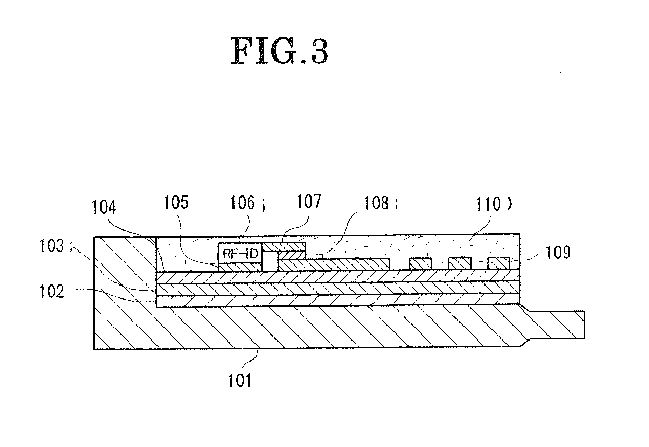

FIG. 3 is a sectional view of another embodiment of the disk structure according to the present invention.

In this embodiment, an ordinary optical disk 101 has a recess, in which the above-described metal film 102, magnetic thin film 103, insulating film 104, RF-ID chip 106, and antenna coil 109 are formed. The recess is filled up with a resin mold layer 110 so that the above-described components are covered with the layer 110. This construction is slightly thicker than ordinary optical disks, but optical structures that are uniform in thickness are obtained.

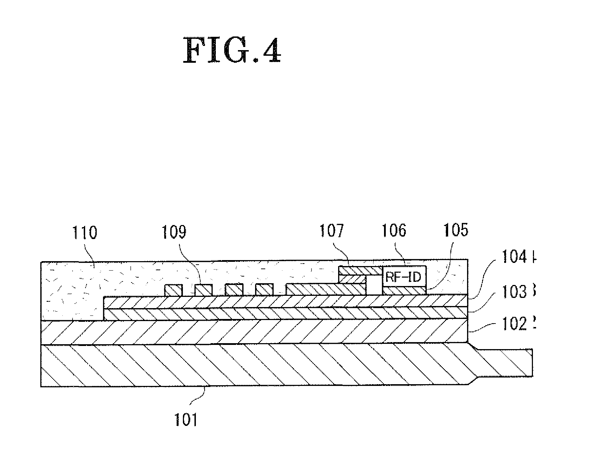

FIG. 4 is a simplified sectional view of a disk structure according to still another embodiment of the present invention.

This embodiment is an alteration of the embodiment shown in FIG. 1 or 3. FIG. 4 shows an alteration of the embodiment of FIG. 1, and a RF-ID chip 106 is arranged on the inner circumferential side of the optical disk (side near the center hole of the optical disk). Except the arrangement of the RF-ID chip 106, this embodiment is the same as the embodiment shown in FIG. 1. In this embodiment, since the RF-ID chip 106 is installed on the inner circumferential side of the optical disk, eccentricity during disk rotation is reduced compared with the case where it is installed on the outer side and therefore rotation is stabilized, whereby stabilization of operations can be obtained.

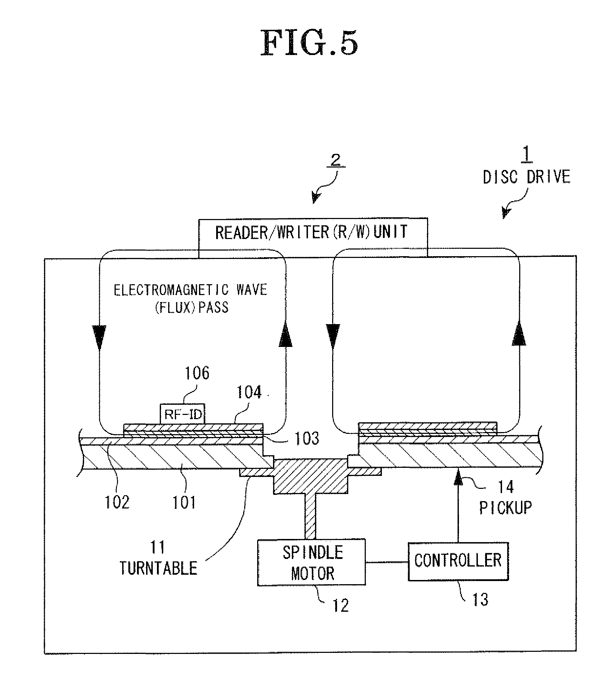

FIG. 5 shows a simplified diagram as the disk (optical disk) 101 according to the present invention is loaded in a disk drive 1 and operated, and is a diagram for explaining advantages obtained by the present invention.

The optical disk 101 is placed on a turntable 11 that is spun by a spindle motor 12 of the disk drive 1. A controller 13 controls rotation of the spindle motor 12 and also controls the position of a pickup 14 in order to read optical data from the optical data recording surface of the optical disk 101.

The transfer of signals between the RF-ID chip 106 mounted on the optical disk 101 and an external unit is performed by radio signals. For that reason, the disk drive 1 has a reader/writer (R/W) unit 2 disposed on the outside surface thereof.

The reader/writer (R/W) unit 2 has an antenna and a radio circuit, and between this antenna and the antenna (antenna coil 109) formed in the RF-ID chip 106 mounted on the optical disk 101, information is transferred by radio signals.

The RF-ID chip 106 is used for performing non-contact communication by using electromagnetic waves, and enables data within a semiconductor memory (IC chip) to be read and written in a non-contact state. The RF-ID chip 106, as described above, is normally made up of an IC chip and a coil-shaped antenna connected to the IC chip.

The reader/writher (R/W) unit 2 has a reading/writing function, and between this unit 2 and the transmitting/receiving portion of the RF-ID chip 106 disposed on the optical disk surface, data is transferred by radio communication. The data communication between the reader/writer (R/W) 2 and the transmitting/receiving portion of the RF-ID chip 106 is performed, for example, at a transmission rate of 106 Kbytes/s (Kbps).

If the RF-ID chip 106 receives radio waves from the reader/writer (R/W) unit 2 through the antenna thereof, a resonance phenomenon causes an electromotive force to occur (electromagnetic induction, etc.), and this electromotive force is rectified by a power-supply rectifying section and is used as a power source for the RF-ID chip 106.

As previously described, in the case of employing conventional optical disks, when a high-frequency signal of a few MHz or greater is sent out from the reader/writer (R/W) unit 2 to the RF-ID chip 106 housed in the disk drive 1, a radio wave flows through not only the RF-ID chip 106 but also various circuits and conductors (spindle motor, etc.) within the disk drive 1, induces an eddy current, and becomes a noise component relative to signals flowing through electric circuits.

In contrast, in the present invention, the RF-ID chip 106 is mounded on the surface of the optical disk 101 that faces the reader/writer (R/W) unit 2, various circuits and conductors are disposed on the surface opposite to the surface on which the RF-ID chip 106 is mounted, and on the underside of the RF-ID chip 106, the magnetic thin film 103 is formed. Therefore a high-frequency radio wave concentratedly passes through the magnetic thin film 103 that is high in magnetic permeability, does not pass through electric circuits and conductors mounted on the underside of the optical disk 101, and the induction of an eddy current is considerably reduced compared with prior art. That is to say, a magnetic shielding effect is obtained.

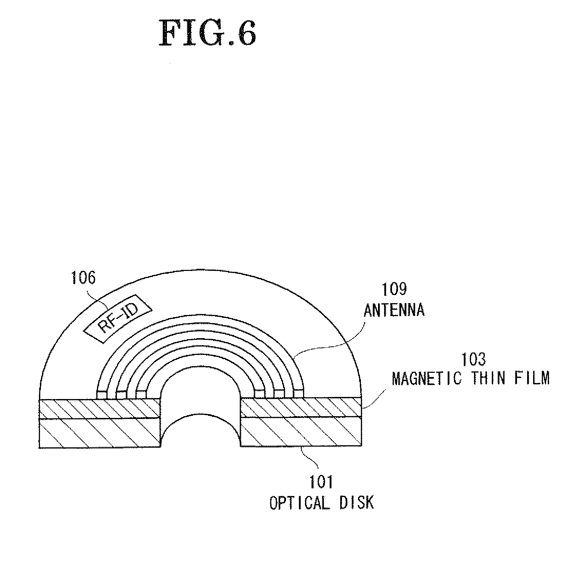

FIG. 6 is a simplified sectional view of a disk structure according to yet another embodiment of the present invention.

In this embodiment, the presence of a magnetic thin film 103 (high magnetic permeability is preferable) formed on an optical disk 101 causes a high-frequency radio signal from the reader/writer (R/W) unit 2 to concentratedly pass through the magnetic thin film 103, whereby magnetic shielding is obtained. Accordingly, a metal film 102 is not necessarily needed. In this embodiment, the metal film 102 is omitted, the magnetic thin film 103 is formed directly on the optical disk 101, and the RF-ID chip 106 is provided on the magnetic thin film 103.

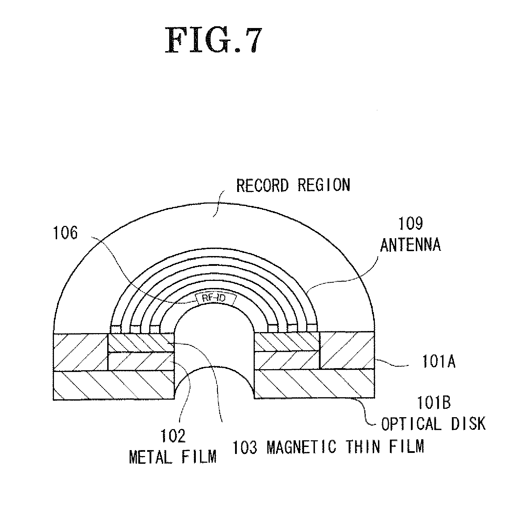

FIG. 7 is a simplified sectional view of a disk structure according to a further embodiment of the present invention.

This embodiment applies the present invention to a double sided optical disk in which two optical disks (101A and 101B) are bonded together. Since optical data recording regions are respectively provided on both sides, a RF-ID chip cannot be mounted on a side on which no optical data recording region is present, as in the above-described embodiments. Hence, in this embodiment, the structure of the present invention is formed on a blank region which is not an optical data recording region. The optical disk 101A has the metal film 102, magnetic thin film 103, RF-ID chip 106, and antenna 109 formed thereon.

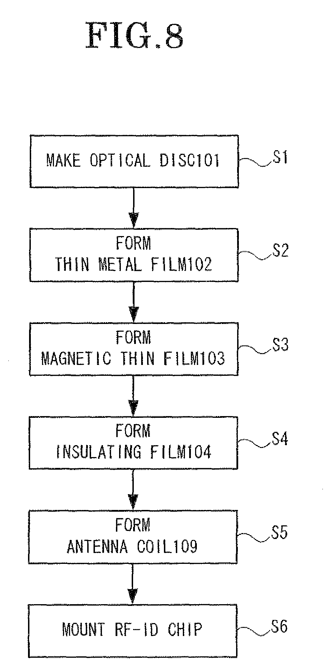

The disk structures of the present invention described above are obtained through manufacturing steps such as those shown in FIG. 8. After an ordinary optical disk has been made (step S1), a thin film of metal 102 is formed on a predetermined portion on the optical disk (step S2), and a magnetic thin film 103 is formed on the metal film 102 (step S3). Subsequently, an insulating film 104 is formed (step S4). To form an antenna coil, a thin film of metal such as aluminum is formed and then etched so that an antenna coil 109 is formed into a predetermined shape (step S5).

And an RF-ID chip 106 is mounted on a predetermined region on the optical disk 10 through an adhesive layer 105 and is connected to the antenna coil 109 through a lead 107 (step S6). Note that the above-described step S2 of forming the metal film 102 can be omitted.

While the present invention has been described in detail with reference to the preferred embodiments thereof, the invention is not to be limited to the details given herein, but may be modified within the scope of the invention hereinafter claimed. For example, even if the above-described embodiments do not include the thin film of metal (aluminum), advantages of the present invention can be obtained. In the case where two disks are bonded together, if an electronic circuit such as an RF-ID chip is installed at a position near the central portion so that they are sandwiched in between the two disks, damage to the electronic circuit due to clamp pressure can be prevented.

## Claims

1. A disk structure in which components of a radio communication unit are formed on a magnetic thin film formed on a disk.

2. A disk structure in which a thin film of metal, a magnetic thin film, and an insulating film are formed on a disk in this order, and in which an RF-ID chip and components of an antenna connected to said RF-ID chip are formed on said insulating film.

3. A disk structure in which a magnetic thin film and an insulating film are formed on a disk in this order, and in which an RF-ID chip and components of an antenna connected to said RF-ID chip are formed on said insulating film.

4. The disk structure as set forth in claim 2, wherein said thin film of metal is formed from an aluminum material.

5. The disk structure as set forth in any one of claims 1 to 4, wherein said magnetic thin film is formed from a ferrite material.

6. The disk structure as set forth in any one of claims 1 to 5, wherein said disk has a recess in which said components are formed.

7. The disk structure as set forth in any one of claims 1 to 6, wherein said components are covered with a resin mold layer.

8. The disk structure as set forth in claim 6, wherein said components formed in said recess are covered with a resin mold, the resin mold being grown to a thickness such that its top surface becomes approximately coplanar with a disk surface.

9. The disk structure as set forth in any one of claims 1 to 8, wherein said radio communication unit and RF-ID chip are mounted on an inner circumferential side of the disk.

10. The disk structure as set forth in any one of claims 1 to 9, wherein said disk has recording surfaces on both surfaces, respectively.

11. The disk structure as set forth in any one of claims 1 to 10, wherein said disk is made by bonding two disks together, said radio communication unit being installed at a position near a central portion so that it is sandwiched in between said two disks.

12. The disk structure as set forth in any one of claims 1 to 11, wherein said disk is an optical disk.

13. A disk-structure manufacturing method comprising:
a step of making a disk;
a step of forming a thin film of metal on a predetermined portion on said disk;
a step of forming a magnetic thin film on said thin film of metal;
a step of forming an insulating film on said magnetic thin film;
a step of forming a thin film of metal on said insulating film and then forming the metal film into an antenna coil having a desired shape by etching; and
a step of mounting an RF-ID chip on a predetermined region on said disk through an adhesive layer and connecting said RF-ID chip to said antenna coil.

14. A disk-structure manufacturing method comprising:
a step of making a disk;
a step of forming a magnetic thin film on a predetermined portion on said disk;
a step of forming an insulating film on said magnetic thin film;
a step of forming a thin film of metal on said insulating film and then forming the metal film into an antenna coil having a desired shape by etching; and
a step of mounting an RF-ID chip on a predetermined region on said disk through an adhesive layer and connecting said RF-ID chip to said antenna coil.
